(19)
Europäisches
Patentamt
European
Patent Office
Office européen
des brevets

(11) **EP 4 254 409 A1**

(12) # EUROPEAN PATENT APPLICATION

(43) Date of publication:
**04.10.2023 Bulletin 2023/40**

(21) Application number: **23161727.5**

(22) Date of filing: **14.03.2023**

(51) International Patent Classification (IPC):
**G10L 25/84** (2013.01)   **G10L 25/78** (2013.01)

(52) Cooperative Patent Classification (CPC):
**G10L 25/84; G10L 2025/783**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.03.2022 CN 202210319615**

(71) Applicant: **Harman International Industries, Incorporated**
**Stamford, CT 06901 (US)**

(72) Inventors:
• **YANG, Ruiting**
**Shenzhen (CN)**
• **SHI, Len**
**Shenzhen (CN)**
• **WANG, Sherry**
**Shenzhen (CN)**
• **DENG, Xiang**
**Shenzhen (CN)**
• **PENG, Shaomin**
**Stamford, CT, 06901 (US)**

(74) Representative: **Westphal, Mussgnug & Partner, Patentanwälte mbB**
**Werinherstraße 79**
**81541 München (DE)**

(54) **VOICE DETECTION METHOD**

(57)   The present disclosure provides a method for detecting voice using an in-ear audio sensor, including performing the following processing on each frame of input signals collected by the in-ear audio sensor: calculating a count change value based on at least one feature of an input signal of a current frame, wherein the at least one feature includes at least one of an estimated signal-to-noise ratio, a spectral centroid, a spectral flux, a spectral flux difference value, spectral flatness, energy distribution, and spectral correlations between adjacent frames; adding the calculated count change value with a previous count value of a previous frame to obtain a current count value; comparing the obtained current count value with a count threshold; and determining the category of the input signal of the current frame based on the comparison result and feature attributes, wherein the category includes noise, voiced sound, or unvoiced sound.

EP 4 254 409 A1

## Description

### Technical Field

The present disclosure generally relates to a voice detection method, and particularly relates to a method for detecting a wearer's voice using an in-ear audio sensor.

### Background

Voice detection (or commonly called voice activity detection (VAD)) is used to indicate whether a section of sound contains human voice. It is widely used and can play an important role in voice processing systems and devices such as earphones, hearing aids, etc. On the principle of pronunciation, voice and noise are distinguishable because the process of producing voice makes sound of human, especially voiced sound phonemes, different from most noise. In addition, the intensity of voice in a noisy environment is usually higher than that of pure noise, because noisy voice is the sum of uncorrelated human voice and noise. However, accurately distinguishing voice signals from noise is an industry challenge. The reasons are: the intensity of some voice signals is weak; the types of noise are variable and not always stable; what is more difficult is that more than 20% of unvoiced sound phonemes in human voice do not have a harmonic structure, the relative intensity is weak, and the spectral structure itself is similar to that of some noise. Therefore, accurate voice detection in a noisy environment is always a challenging task.

Furthermore, unvoiced sound detection is still a difficult and unsolved problem. The prior art lacks a detection mechanism with a low missed detection rate and a low false alarm rate for classifying unvoiced sound, voiced sound, and various noise scenes in voice detection.

### Summary of the Invention

In one aspect, one or more embodiments of the present disclosure provide a method of detecting voice using an in-ear audio sensor. The method includes performing the following processing on each frame of input signals collected by the in-ear audio sensor: calculating a count change value based on at least one feature of an input signal of a current frame, wherein the at least one feature includes at least one of a signal-to-noise ratio, a spectral centroid, a spectral flux, a spectral flux difference value, spectral flatness, energy distribution, and spectral correlations between adjacent frames; adding the calculated count change value with a previous count value of a previous frame to obtain a current count value; comparing the obtained current count value with a count threshold; and determining the category of the input signal of the current frame based on the comparison result, wherein the category includes noise, voiced sound, or unvoiced sound.

### Description of the Drawings

The present disclosure can be better understood by reading the following description of nonlimiting implementations with reference to the accompanying drawings.

FIG. 1 schematically shows a schematic diagram of the position of an in-ear microphone in an earphone;
FIG. 2 shows, by way of example, a section of voice signal measured by the in-ear microphone;
FIG. 3 shows a flow chart of a voice detection method based on an in-ear audio sensor according to one or more embodiments of the present disclosure;
FIG. 4 shows an example of a voice detection method based on an in-ear audio sensor according to one or more embodiments of the present disclosure;
FIG. 5 shows a simulated chart of a detection result of a voice detection method based on an in-ear audio sensor according to one or more embodiments of the present disclosure; and
FIG. 6 shows a simulation diagram of another detection result of a voice detection method based on an in-ear audio sensor according to one or more embodiments of the present disclosure;

### Detailed Description

It should be understood that the following description of the given embodiments is for illustrative purposes only, and not restrictive.

The use of a singular term (such as, but not limited to, "a") is not intended to limit the number of items. Use of relational terms, such as, but not limited to "top", "bottom", "left", "right", "upper", "lower", "downward", "upward", "side", "first" , "second" ("third", etc.), "inlet", "outlet", etc. are used in written descriptions for clarity when specific reference is made to the drawings and are not intended to limit the scope of the present disclosure or the appended claims, unless otherwise stated. The terms "including" and "such as" are illustrative rather than restrictive, and the word "may" means "may, but does not have to", unless otherwise stated. Notwithstanding the use of any other language in the present disclosure, the embodiments shown in the drawings are examples given for purposes of illustration and explanation, and not the only embodiment of the subject matter herein.

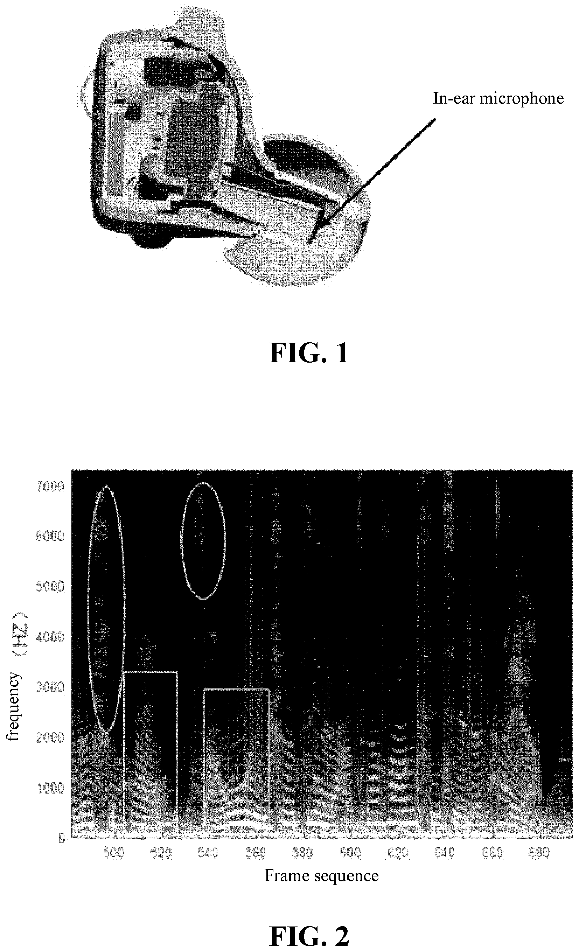

The present disclosure mainly focuses on voice detection for earphone devices. The earphone device includes at least one in-ear audio sensor. The in-ear audio sensor can be, for example, an in-ear microphone. Usually, the in-ear microphone in the earphone can be widely used as a feedback (FB) microphone for the active noise cancellation (ANC) function. FIG. 1 shows an example of the position of an in-ear microphone in an earphone.

The method for detecting voice of the present disclosure uses only a signal received by aninear audio sensor, and based on key acoustic features, especially based on the combination of threshold conditions associated with the key acoustic features, through a voting mechanism, an input signal is detected, so that voiced sound, unvoiced sound, and noise can be detected with high accuracy.

The inventors conducted research on signals captured by the in-ear microphone. When the in-ear microphone is worn correctly, that is, when the in-ear microphone is inserted into the human ear and physically isolated from the environment, received ambient noise is greatly attenuated. Likewise, airborne human sound is also isolated to a certain degree. However, a voice signal of human can also be conducted through bones and tissue, and also through the Eustachian tube. The Eustachian tube is a small channel that connects the throat to the middle ear. Compared with an air-conducted voice signal, the voice signal received by the in-ear microphone shows higher intensity in an extremely low frequency band (for example, below 200 Hz). However, in a frequency band of 200-2500Hz, the intensity of the signal gradually decreases, and the signal almost disappears in a higher frequency range. Interestingly, the inventors found that an unvoiced sound signal can propagate through the narrow Eustachian tube, although the intensity thereof is very weak, even in a high frequency band above 6000 Hz. FIG. 2 shows an example of a brief voice signal received by the in-ear microphone. In this example, the voice signal contains voiced sound and unvoiced sound. It can be seen that the voiced sound is mainly concentrated in the low frequency band. The oval circles in the figure exemplarily mark two examples of unvoiced sound, and the rectangular boxes exemplarily mark two examples of voiced sound. Compared with most bone conduction sensors at present that can only capture voiced sound signals below 1000 Hz and miss unvoiced sound, the in-ear audio sensor, such as a microphone, can still capture richer acoustic information.

The inventor further summarizes the features of voiced sound and unvoiced sound and compares them with various types of noise based on a comprehensive analysis of sound signals received by the in-ear audio sensor, such as the in-ear microphone. Specifically, in an in-ear channel, the unvoiced sound and voiced sound signals are different from signals of noise, as summarized below.

- Voiced Sound:

  1) the intensity is high/the signal-to-noise ratio (SNR) is high in the in-ear channel;
  2) at the beginning and end of each sentence, the SNR is low, but the spectral flatness is low;
  3) there is a fundamental frequency (F0) signal, and there is a harmonic structure corresponding thereto in the spectrum; due to the propagation medium, the energy is concentrated in medium and low frequencies (below 2500 Hz);
  4) the spectral centroid is low, but not lower than or close to the fundamental frequency;
  5) the spectral flux is high;
  6) the spectral flux change at the beginning of the sound is a positive number;
  7) below 2500 Hz, energy attenuation increases as the frequency increases, but there is a significant loss above 2500 Hz;
  8) the spectrum flatness is low in a full frequency band;
  9) the spectral flatness in frequency sub-bands containing most of the energy is low;
  10) the spectrum extension degree (the second-order central moment of the spectrum) is low;
  11) it is mostly distributed in wide frequency bands, except for the low frequency at the beginning or end of sentences;
  12) it usually has good correlations with several adjacent frames.

- Unvoiced Sound:

  1) the intensity is relatively weak/the SNR is low in the in-ear channel;
  2) the spectral centroid is medium/high;
  3) some have a wide frequency band and high spectral flatness and are spread over the full frequency band, such as fricative sounds /s/, /f/;

4) some have more energy distribution in the high frequency band, such as over 5000 Hz or higher;

5) some have high spectral flatness only in the high frequency band;

6) some have high spectral flatness in the medium-frequency to high-frequency band (e.g., 3000-7000 Hz);

7) some have significant energy distribution in the medium-frequency band (such as 3000-5000 Hz), and the spectral flatness in the frequency band is also high;

8) the spectral flux difference value at the beginning of a word is positive;

9) it appears at the beginning and end of a word;

10) the duration is short;

11) it can be in the low frequency band and the medium frequency band, such as plosives and obstruents, but there is no F0 or harmonic waves, and the energy in the low frequency band is not as dominant as voiced sound phonemes;

12) if it is not a plosive phoneme, the energy of the medium frequency band should not be significantly greater than the energy of the high frequency band;

13) the correlations between frames are weak;

14) there are no sharp spectral peaks.

- Noise: it does not belong to any sound of speech of an earphone wearer

1) most of it is stable and in the low frequency band;

2) if the in-ear audio sensor is inserted well, the intensity in the in-ear channel is relatively weak;

3) some strong noise will still leak into the ear canal, such as strong noises from subway stations and roads in daily life;

4) the spectral centroid may be very high;

5) it may be concentrated at very low frequencies, with a low spectral centroid, such as car noise;

6) it can be medium/high narrow-band noise, such as sharp noise produced by the friction between the subway and the rail when braking, and the spectrum flatness and the spectrum extension degree are small;

7) it may have relatively high, but not very high, spectral flatness in the full frequency band;

8) it may have extremely high spectral flatness, such as some shock/knock impulse noises, which may be misestimated as having a high SNR but low spectral peaks;

9) the spectral flux is usually low;

10) some noise is very similar to unvoiced sound phonemes, but lasts longer and has strong correlations between frames;

11) some noise has strong energy in the extremely low frequency band (below 400 Hz), but has high spectral flatness, which is different from voiced sound phonemes;

12) some noise has significant loss of energy after high-pass filtering with DC-block as the target;

13) some noise has significant energy distribution in the medium frequency band (3000-5000 Hz), but has no significant energy distribution in the high frequency band;

14) some noise has sharp spectral peaks, but has no harmonic waves.

- Interference: external sound or sound of talk of non-wearers, or human voice played by other devices, if leaked and taken in by an in-ear audio sensor, it is considered as noise here.

1) it is weak with respect to voice of a wearer;

2) there is faster energy attenuation relative to the frequency; but there are high-frequency harmonic parts, which is different from the energy distribution of the wearer's sound.

It is worth noting that the voiced sound and the unvoiced sound may be superimposed and polluted with noise, so some preprocessing for noise cancellation is required.

The present disclosure provides a causal voice detection method using only an in-ear microphone. The method starts from at least one acoustic feature, and realizes the detection of voiced sound, unvoiced sound, and noise in voice by developing a combined threshold method. Among them, all thresholds are based on different categories of acoustic features to form the combined threshold conditions for voice detection. For example, the acoustic features include, but are not limited to, a signal-to-noise ratio, a spectral centroid, a spectral flux, a spectral flux difference value, spectral flatness, energy distribution, and spectral correlations between adjacent frames. The formulas of several of these features are given below for easy understanding.

$$\text{Estimated SNR:} \quad PSNR(k) = \frac{f(|(x(k)|)}{\hat{n}(k)} \tag{1}$$

$$\text{Spectral centroid:} \quad S_{Ce}(k) = \frac{\sum_{n=n0}^{n1} f_n |X_r(f_n,k)|^2}{\sum_{n=n0}^{n1} |X_r(f_n,k)|^2} \tag{2}$$

$$\text{Spectral flatness:} S_{Flat}(k) = \frac{\exp(\sum_{n=n0}^{n1} \log(|X_r(f_n,k)|^2)}{\sum_{n=n0}^{n1} |X_r(f_n,k)|^2} \tag{3}$$

$$\text{Spectral flux:} \quad S_{Flux}(k) = \sqrt{\sum_{n=0}^{N-1}(|X_r(f_n,k)|^2 - |X_r(f_n,k-1)|^2)^2} \tag{4}$$

$$\text{Spectral flux difference value:} flux\_diff(k) = S_{Flat}(k) - S_{Flat}(k-1) \tag{5}$$

$$\text{Spectral energy ratio between frequency bands:} P\_ratio(k) = \frac{\sum_{n=n2s}^{n2e} |X_r(f_n,k)|^2}{\sum_{n=n1s}^{n1e} |X_r(f_n,k)|^2} \tag{6}$$

Where k represents an index of a frame. $f_n$ represents the center frequency of the *nth* frequency bin in the spectrum. $x(k), \hat{n}(k)$ and $X_r(f_n,k)$ represent a time signal at the kth frame, the estimated value of the noise floor, and the spectrum value of a received signal at $f_n$, respectively. $f(|(x(k)|)$ represents the total energy or amplitude peak value of the kth frame. Further, where *nis* and *nie* represent the index of the frequency bin at the beginning and end of the *i-th* frequency band, respectively.

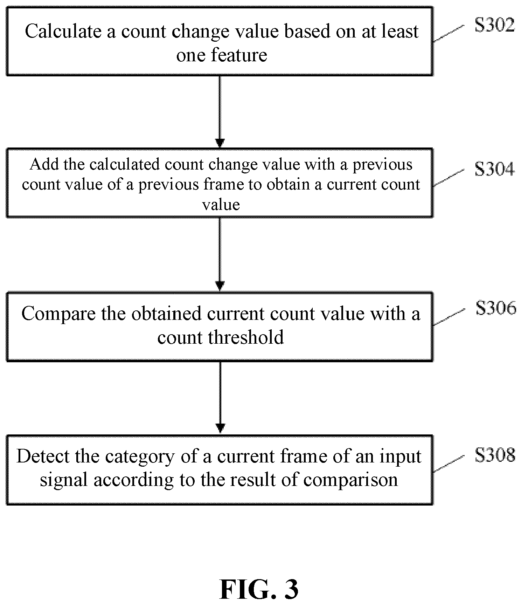

FIG. 3 schematically shows a flow chart of a voice detection method based on an in-ear sensor according to one or more embodiments of the present disclosure. The voice detection method includes processing performed on each frame of input signals collected by the in-ear sensor in an earphone. The length of a signal frame can be set according to the actual requirements of a system. The voice detection method is a causal detection method, that is, a method that only uses data of a current frame and a previous frame.

As shown in FIG. 3, in S302, a count change value is calculated based on at least one feature of a current frame. The feature may include, but is not limited to, at least one of an SNR, a spectrctal centroid, a spectral flux, a spectral flux difference value, spectral flatness, energy distribution, and spectral correlations between adjacent frames. In some embodiments, each feature may be associated with one or more threshold conditions. The threshold conditions are conditions used to determine whether the feature satisfies one or more thresholds. In some embodiments, different threshold conditions for different features may be used alone or in combination for a corresponding increase, decrease, or retention for votes for the probability of voice. Combining these increases, decreases, or retentions for the votes for the probability of voice, a count change value (change value of the number of votes) can be obtained. In some embodiments, calculating the count change value based on the at least one feature of the current frame may include: combining at least one threshold condition of the at least one feature such SNR, spectral centroid, spectral flux, spectral flux difference value, spectral flatness, energy distribution, and spectral correlations between adjacent frames so as to obtain a plurality of combined threshold conditions. The combined threshold condition may include a combined threshold condition for count increase and a combined threshold condition for count decrease. According to the combined threshold condition for count increase and the combined threshold condition for count decrease, an addend or a subtrahend can be correspondingly obtained. The addend and the subtrahend indicate changes in the votes for the probability of voice. It can be understood that if the addend and the subtrahend are 0, it means to keep the current votes for the probability of voice. The count change value can be calculated based on the addend and the subtrahend. The count change value represents a change value of the number of the votes for the probability of voice for a current frame signal.

In some embodiments, in order to improve the determining accuracy of classification, the method will further combine a previous count value of a previous frame to determine a count value of the current frame. The previous count value of the previous frame represents a value of votes for the probability of voice for the previous frame signal. The current count value represents a value of votes for the probability of voice for the current signal. For example, in S304, the calculated count change value of the current frame is added with the previous count value of the previous frame to obtain the current count value.

Next, in S306, the current count value obtained in S304 is compared with a count threshold. And in S308, according to the result of comparison, the category of the current frame of the input signal may be detected. That is, it can be determined whether the current frame is voiced sound, unvoiced sound, or noise.

The method shown in FIG. 3 employs a voting mechanism for the probability of voice based only on one or more acoustic features of a signal frame received by an in-ear microphone, i.e., it can accurately identify situations in which voice is included or voice is not included (e.g., quiet or noisy), and further detect noise, voiced sound, and unvoiced sound, without performing statistical analysis and machine learning on data of earphone devices in multiple different models in advance.

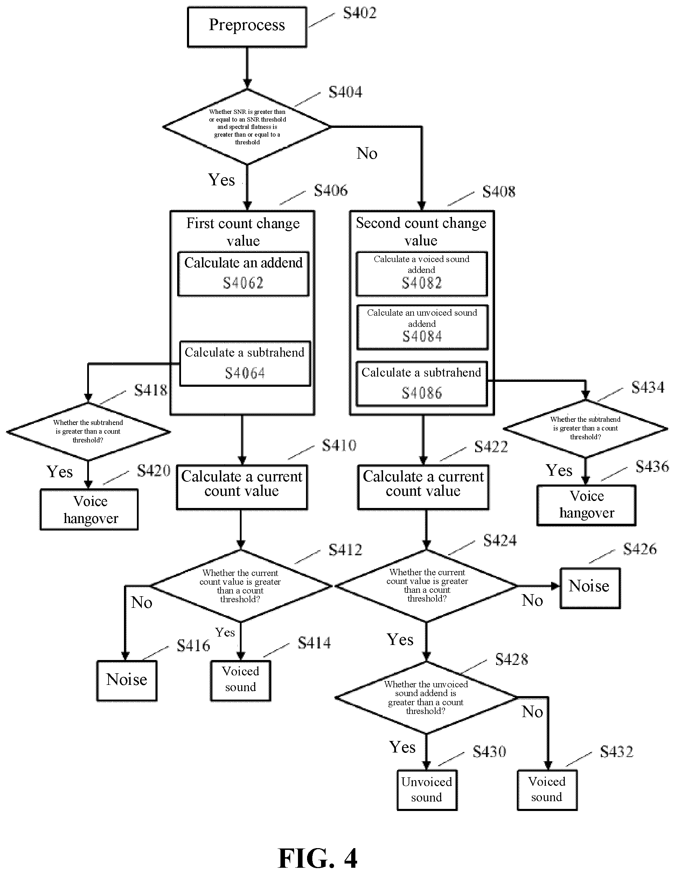

FIG. 4 shows an example of the voice detection method according to one or more embodiments of the present invention.

In S402, preprocessing may be performed on a sound signal received through the in-ear microphone. In some embodiments, high-pass filtering may be performed on the received signal first to filter out DC components and low-frequency noise floor. In some embodiments, mild noise cancellation processing (for example, using a minimum tracking method) may also be performed on the signal to eliminate the part of external noise leaked to the in-ear audio sensor. For example, in order to reduce stationary noise that mainly occurs in a low frequency band, noise cancellation by multiband spectral subtraction can be performed. It should be noted that since both noise and unvoiced sound are relatively weak, noise estimation should avoid overestimation to prevent weak unvoiced sound from being severely damaged. The preprocessing in S402 may be preprocessing on the current frame.

In S404, the estimated SNR of the current frame is compared with an SNR threshold, and the spectral flatness is compared with a corresponding spectral flatness threshold. If the estimated SNR of the current frame is greater than or equal to the SNR threshold, and the spectral flatness is less than or equal to the corresponding spectral flatness threshold, the method proceeds to S406, and calculation of a first count change value is performed. If the estimated SNR of the current frame is less than the SNR threshold, or the spectral flatness is greater than the corresponding spectral flatness threshold, the method proceeds to S408, and calculation of a second count change value is performed.

In some embodiments, in S406, the calculation of the first count change value may include S4062: calculating an addend and S4064: calculating a subtrahend based on a combined threshold condition. The first count change value of the current frame can be obtained based on the calculated addend and subtrahend.

In one example, the combined threshold condition associated with the addend may include combined threshold conditions associated with SNR and spectral flatness. For example, the combined threshold condition may be that SNR is greater than the minimum SNR and the spectral flatness is less than a certain threshold. If the combined threshold condition is satisfied, then based on a value of SNR, the addend is calculated. For example, when the combined threshold is satisfied, obtained addends are different depending on different values of SNR.

In another example, the combined threshold condition associated with the subtrahend may include a plurality of combined threshold conditions associated with at least one of energy distribution, spectral flatness, and spectral centroid. For example, the combined threshold condition for count decrease associated with energy distribution and spectral flatness may define the following conditions: more than 90% of signal energy is distributed below 1250 Hz, and in each frequency band, such as 100-1250 Hz, 1250-2500 Hz, 2500-5000 Hz, and 5000-7500 Hz, the spectral flatness is very high. For example, the combined threshold condition for count decrease associated with energy distribution and spectral flatness may further define the following conditions: more than 95% of signal energy is distributed in 300-1250 Hz, and the spectral flatness of a frequency band below 300 Hz is very high. For example, the combined threshold condition associated with energy distribution and spectral centroid may define the following condition: energy is distributed in the high frequency part, for example, the spectral centroid being above 4000 Hz. It is worth noting that the present disclosure explains, only by taking an example, the principle of the combined threshold conditions, rather than exhaustively or specifically limiting the combined threshold conditions. Those skilled in the art can realize through the principle of the combined threshold conditions disclosed in the present disclosure that the combined threshold condition for count decrease can be formed based on at least one of features listed above such as SNR, spectral centroid, spectral flux, spectral flux difference value, spectral flatness, energy distribution, and spectral correlations between adjacent frames. The subtrahend can be calculated based on the above at least one combined threshold condition for count decrease.

Thus, in S406, based on the addend calculated in S4062 and the subtrahend calculated in S4064, the first count change value is obtained.

Next, in S410, the current count value is calculated. For example, the first count change value calculated in S406 is added with the previous count value of the previous frame to obtain the current count value.

Next, in S412, whether the current count value is greater than a count threshold is determined. If the current count value is greater than the count threshold, the method proceeds to S414, and the input signal of the current frame is determined as voiced sound. If the current count value is less than or equal to the count threshold, the method proceeds to S416, and the input signal of the current frame is determined as noise. The count threshold can be preset. For example, it can be set to 0.

In addition, in some embodiments, the magnitude of the current count value (that is, the magnitude of the value of the votes) may also correspond to different probability values respectively, so as to be used for determining the probability at which voice is contained.

In addition, in some embodiments, for example, in S418, it is determined whether the subtrahend calculated in S4064 is greater than the count threshold. If the subtrahend is greater than the count threshold, the input signal of the current frame is determined as voice hangover. Voice hangover refers to brief pauses between voice elements or syllables. If the input signal of the current frame is determined as voice hangover, it means that the determining result of the probability of voice of the current frame will continue to be the voice determining result of the previous frame (for example, it is determined as unvoiced sound or voiced sound). The present disclosure introduces the determining mechanism for voice hangover, and makes a more detailed classification for situations in voice detection, thereby improving the fineness of detection and improving the efficiency of voice detection, and at the same time avoiding some unnecessary operations caused when a very short pause between syllables is taken as noise.

In some other embodiments, in S408, the calculation of the second count change value may include S4082: calculating a voiced sound addend value, S4084: calculating an unvoiced sound addend value, and S4086 calculating the subtrahend. Based on the voiced sound addend value calculated in S4082, the unvoiced sound addend value calculated in S4084, and the subtrahend calculated in S4086, the second count change value of the current frame may be obtained.

In one example, S4082: calculating a voiced sound addend value may include: calculating the voiced sound addend value based on the combined threshold condition for voiced sound. The combined threshold condition for voiced sound may include a plurality of combined threshold conditions associated with at least one of energy distribution, spectral flatness, spectral centroid, and spectral flux. For example, the combined threshold condition for voiced sound associated with energy and spectral flatness may define the following conditions: high energy and low spectral flatness (with a harmonic structure). For example, the combined condition associated with energy distribution may define the following condition: energy attenuates as the frequency increases and substantially disappears at above 2500 Hz. It is worth noting that the present disclosure explains, only by taking an example, the principle of the combined threshold condition for voiced sound, rather than exhaustively or specifically limiting the combined threshold condition for voiced sound. Those skilled in the art can realize through the principle of the combined threshold condition for voiced sound disclosed in the present disclosure that the combined threshold condition for voiced sound can be formed based on at least one of the features of voiced sound listed above such as SNR, spectral centroid, spectral flux, spectral flux difference value, spectral flatness, energy distribution, and spectral correlations between adjacent frames.

In one example, S4084: calculating an unvoiced sound addend value may include: calculating the unvoiced sound addend value based on the combined threshold condition for unvoiced sound. The combined threshold condition for unvoiced sound may include a plurality of combined threshold conditions associated with at least one of energy distribution, spectral flatness, spectral centroid, and spectral flux. For example, the combined threshold condition for unvoiced sound associated with energy distribution and spectral flatness may define the following conditions: a wideband signal, uniform energy distribution in each frequency band, large total spectral flatness, and high spectral flatness in each frequency band. The combined threshold condition for unvoiced sound associated with energy distribution, spectral flux, and spectral flatness can also define the following conditions: at the beginning of voice, the energy is concentrated in a frequency band of 2500-7500 HZ, and the spectral flatness is relatively high at 2500-5000 Hz and 5000-7500 HZ, with increased energy compared to the previous frame (i.e., the spectral flux difference value being positive). It can be understood that the present disclosure explains, only by taking an example, the principle of the combined threshold condition for unvoiced sound, rather than exhaustively or specifically limiting the combined threshold condition for unvoiced sound. Those skilled in the art can realize through the principle of the combined threshold conditions for unvoiced sound disclosed in the present disclosure that the combined threshold condition for unvoiced sound can be formed based on at least one of the features of unvoiced sound listed above such as SNR, spectral centroid, spectral flux, spectral flux difference value, spectral flatness, energy distribution, and spectral correlations between adjacent frames.

In another example, S4086: calculating a subtrahend may include: calculating the subtrahend based on at least one combined threshold condition for count decrease. The specific process of calculating the subtrahend in S4086 may be similar to that of the calculation of the subtrahend in S4064, and the details are omitted here.

Thus, in S408, based on the voiced sound addend value calculated in S4082, the unvoiced sound addend value calculated in S4084, and the subtrahend calculated in S4086, the second count change value is obtained.

Next, in S422, the current count value is calculated. For example, the second count change value calculated in S408 is added with the previous count value of the previous frame to obtain the current count value.

Next, in S424, whether the current count value is greater than the count threshold is determined. The count threshold can be preset. For example, it can be set to 0. If the current count value is less than or equal to the count threshold, the method proceeds to S426, and the input signal of the current frame is determined as noise. If the current count value is greater than the count threshold, the method proceeds to S428. In S428, it is further determined whether the unvoiced sound addend value calculated in S4082 is greater than the count threshold. If the unvoiced sound addend value is greater than the count threshold, the method proceeds to S430, and the input signal of the current frame is determined as unvoiced sound. If the unvoiced sound addend value is less than or equal to the count threshold, the method proceeds to S432, and the input signal of the current frame is determined as voiced sound.

In some embodiments, the magnitude of the current count value (that is, the magnitude of the value of the votes) and/or the magnitude of the voiced sound addend value may also correspond to different probability values, so as to be used for determining the probability of voice.

In addition, in some embodiments, in S434, it is determined whether the subtrahend calculated in S4086 is greater than the count threshold. If the subtrahend is greater than the count threshold, the method proceeds to S436, and the input signal of the current frame is determined as voice hangover.

The method shown in FIG. 4 can vote for the probability of voice based only on a signal received by the in-ear audio sensor, such as a microphone, according to whether a combined threshold condition associated with at least one acoustic feature is satisfied, so that it can fully and accurately detect noise, voiced sound, and unvoiced sound. Compared with the existing methods based on data learning or machine learning, which rely on pre-learning of a large amount of data collected by earphone devices and modeling according to the learning, the method and system of the present disclosure can conduct comprehensive detection on voice based on acoustic features, while avoiding deviations caused by different models of earphone devices and different usage scenarios.

Further, in the method of FIG. 4, different weight values may be set for the threshold condition and/or the combined threshold condition according to the degree of influence of the threshold condition and/or the combined threshold condition on the voting result. When calculating the current count value, the calculation of each addend or subtrahend may further include calculation in combination with the weight value. For example, a high weight value is set for a threshold condition that limits the spectral centroid to be higher than 7 kHz, and when the threshold condition is satisfied, the signal of the current frame can be directly detected as noise. Through the method, special circumstances can also be considered, so that not only the accuracy of detection can be guaranteed, but also the efficiency of detection can be improved.

In some other embodiments, the voice detection method of the present disclosure further includes a method for further correcting the detection result, for example, a method for correcting noise misjudgment by using time-domain features. In an example, if at least one second combined threshold condition is satisfied, the determining result of the signal of the current frame is corrected as noise, wherein the at least one second combined threshold condition includes a combined threshold condition associated with signal energy distribution and spectral correlations between adjacent frames. For example, if there is a high spectral correlation between adjacent frames between the high-frequency part of the signal and the previous frame, the determining result of the signal can be corrected as noise. In another example, if continuous multiple frames are determined as an unvoiced sound signal, the determining result of the signal may be modified as noise. The accuracy and robustness of the voice detection method and system of the present disclosure can be further improved by further correcting the voice detection result.

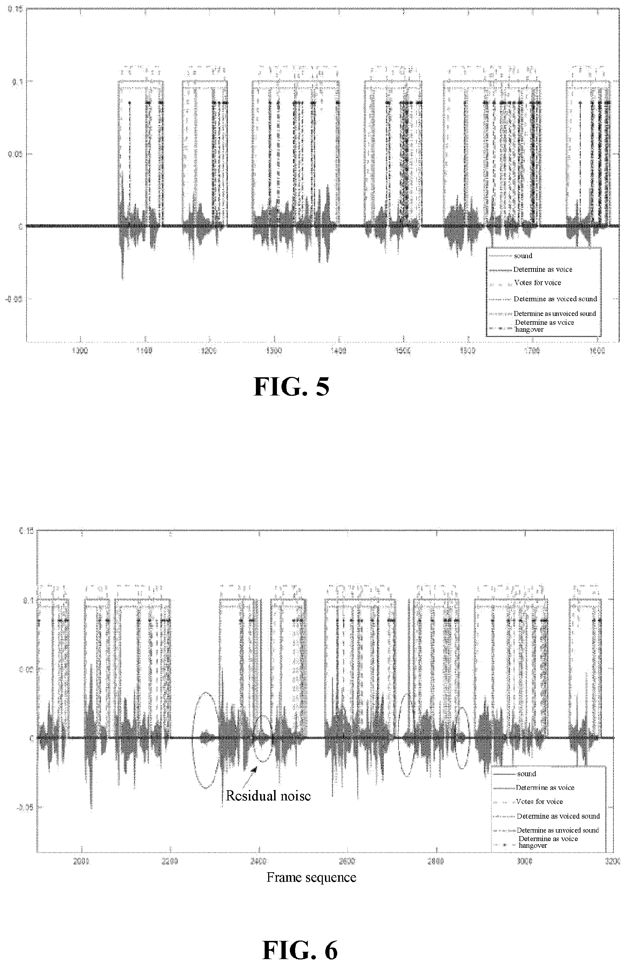

FIG. 5 and FIG. 6 show schematic diagrams of voice detection results in two different situations using the voice detection method of the present disclosure. FIG. 5 shows an example of voice detection with high SNR after noise cancellation (for example, in a scene in a car), and it can be seen from the figure that a system using the voice detection method of the present disclosure can accurately detect short pauses between unvoiced sound, voiced sound, and syllables. In addition, votes for voice can be used for determining the probability of voice. FIG. 6 shows an example of voice detection with a low SNR (for example, in a noisy scene in a subway station hall, including broadcast human voices from non-wearers that are considered noise), and it can be seen from the figure that a system using the voice detection method of the present disclosure can accurately detect voice, and the noise is accurately eliminated, basically no misjudgment will be caused, and even if occasional short-term false detection occurs, it will be quickly corrected.

Clause 1. In some embodiments, a method for detecting voice using an in-ear audio sensor, comprising: performing the following processing on each frame of input signals collected by the in-ear audio sensor:

calculating a count change value based on at least one feature of an input signal of a current frame, wherein the at least one feature includes at least one of a signal-to-noise ratio, a spectral centroid, a spectral flux, a spectral flux difference value, spectral flatness, energy distribution, and spectral correlations between adjacent frames;
adding the calculated count change value with a previous count value of a previous frame to obtain a current count value;
comparing the obtained current count value with a count threshold; and
determining the category of the input signal of the current frame based on the comparison result, wherein the category includes noise, voiced sound, or unvoiced sound.

Clause 2. The method according to any one of the above-mentioned clause, wherein each feature has one or more threshold conditions associated therewith, and wherein the calculating a count change value based on at least one feature of an input signal of a current frame comprises:

obtaining at least one combined threshold condition by combining at least one threshold condition of the at least one feature, the at least one combined threshold condition comprising at least one combined threshold condition for count increase and at least one combined threshold condition for count decrease;
obtaining an addend based on the at least one combined threshold condition for count increase;
obtaining a subtrahend based on the at least one combined threshold condition for count decrease; and
calculating the count change value based on the addend and the subtrahend.

Clause 3. The method according to any one of the above-mentioned clauses, further comprising:

determining whether the estimated signal-to-noise ratio of the current frame is greater than or equal to a signal-to-noise ratio threshold and the spectral flatness is less than or equal to a spectral flatness threshold; and
in response to the estimated signal-to-noise ratio of the current frame being greater than or equal to the signal-to-noise ratio threshold and the spectral flatness being less than or equal to the spectral flatness threshold, performing calculation of a first count change value; or
in response to the estimated signal-to-noise ratio of the current frame being less than the signal-to-noise ratio threshold and the spectral flatness being greater than the spectral flatness threshold, performing calculation of a second count change value.

Clause 4. The method according to any one of the above-mentioned clauses, wherein the performing calculation of a first count change value comprises:

determining whether a first combined threshold condition for count increase in the at least one combined threshold condition for count increase is satisfied, the first combined threshold condition for count increase comprising a combined threshold condition associated with the signal-to-noise ratio and the spectral flatness;
in response to satisfying the first combined threshold condition for count increase, calculating the addend based on a value of the signal-to-noise ratio;
calculating the subtrahend based on the at least one combined threshold condition for count decrease; and
obtaining the first count change value based on the calculated addend and subtrahend.

Clause 5. The method according to any one of the above-mentioned clauses, wherein the performing calculation of a second count change value comprises:

calculating a voiced sound addend value based on a combined threshold condition for voiced sound in the at least one combined threshold condition for count increase;
calculating an unvoiced sound addend value based on a combined threshold condition for unvoiced sound in the at least one combined threshold condition for count increase;
calculating the subtrahend based on the at least one combined threshold condition for count decrease; and
obtaining the second count change value based on the voiced sound addend value, the unvoiced sound addend value, and the subtrahend.

Clause 6. The method according to any one of the above-mentioned clauses, further comprising:
setting the first count change value as the count change value, and adding the count change value with the previous count value of the previous frame to obtain the current count value.
Clause 7. The method according to any one of the above-mentioned clauses, further comprising:
setting the second count change value as the count change value, and adding the count change value with the previous count value of the previous frame to obtain the current count value.
Clause 8. The method according to any one of the above-mentioned clauses, further comprising:

determining whether the current count value is greater than the count threshold; and
in response to the current count value being greater than the count threshold, determining the input signal of the current frame as voiced sound; or
in response to the current count value being less than or equal to the count threshold, determining the input signal of the current frame as noise.

Clause 9. The method according to any one of the above-mentioned clauses, further comprising:

determining whether the current count value is greater than the count threshold; and
in response to the current count value being less than or equal to the count threshold, determining the input signal of the current frame as noise; or

in response to the current count value being greater than the count threshold, determining whether the unvoiced sound addend value is greater than the count threshold:

in response to the unvoiced sound addend value being greater than the count threshold, determining the input signal of the current frame as unvoiced sound; or
in response to the unvoiced sound addend value being less than or equal to the count threshold, determining the input signal of the current frame as voiced sound.

Clause 10. The method according to any one of the above-mentioned clauses, further comprising:

determining whether the subtrahend is greater than the count threshold; and
in response to the subtrahend being greater than the count threshold, determining the input signal of the current frame as voice hangover.

Clause 11. The method according to any one of the above-mentioned clauses, further comprising: if at least one second combined threshold condition is satisfied, correcting the determining result of the signal of the current frame as noise, wherein the at least one second combined threshold condition comprises a combined threshold condition associated with the signal energy distribution and the spectral correlations between adjacent frames.

Clause 12. The method according to any one of the above-mentioned clauses, further comprising: if an input signal of continuous multiple frames is determined as unvoiced sound, modifying the determining result of the input signal of the continuous multiple frames as noise.

Clause 13. In some embodiments, a computer-readable medium, on which computer-readable instructions are stored, when executed by a computer, the computer-readable instructions realizing any one of the methods according to claims 1-12.

Clause 14. In some embodiments, a system, comprising a memory and a processor, the memory storing computer-readable instructions, when executed by the processor, the computer-readable instructions realizing any one of the methods according to claims 1-12.

Any one or more of the processor, memory, or system described herein includes computer-executable instructions that can be compiled or interpreted from computer programs created using various programming languages and/or technologies. Generally speaking, a processor (such as a microprocessor) receives and executes instructions, for example, from a memory, a computer-readable medium, etc. The processor includes a non-transitory computer-readable storage medium capable of executing instructions of a software program. The computer-readable medium can be, but is not limited to, an electronic storage device, a magnetic storage device, an optical storage device, an electromagnetic storage device, a semiconductor storage device, or any suitable combination thereof.

The description of the implementations has been presented for the purposes of illustration and description. Appropriate modifications and changes of the implementations can be implemented in view of the above description or can be obtained through practical methods. For example, unless otherwise indicated, one or more of the methods described may be performed by a combination of suitable devices and/or systems. The method can be performed in the following manner: using one or more logic devices (for example, processors) in combination with one or more additional hardware elements (such as storage devices, memories, circuits, hardware network interfaces, etc.) to perform stored instructions. The method and associated actions can also be executed in parallel and/or simultaneously in various orders other than the order described in this disclosure. The system is illustrative in nature, and may include additional elements and/or omit elements. The subject matter of the present disclosure includes all novel and non-obvious combinations of the disclosed various methods and system configurations and other features, functions, and/or properties.

The description of the implementations has been presented for the purposes of illustration and description. Appropriate modifications and changes of the implementations can be implemented in view of the above description or can be obtained through practical methods. The described method and associated actions can also be executed in parallel and/or simultaneously in various orders other than the order described in this application. The described system is illustrative in nature, and may include other elements and/or omit elements. The subject matter of the present disclosure includes all novel and non-obvious combinations of the disclosed various systems and configurations and other features, functions, and/or properties.

As used in this application, an element or step listed in the singular form and preceded by the word "one/a" should be understood as not excluding a plurality of said elements or steps, unless such exclusion is indicated. Furthermore, references to "one implementation" or "an example" of the present disclosure are not intended to be interpreted as excluding the existence of additional implementations that also incorporate the recited features. The present invention has been described above with reference to specific implementations. However, those of ordinary skill in the art will appreciate that, without departing from the broad spirit and scope of the present invention as set forth in the appended claims, various modifications and changes can be made thereto.

**Claims**

1. A method for detecting voice using an in-ear audio sensor, comprising:
performing the following processing on each frame of input signals collected by the in-ear audio sensor:

   calculating a count change value based on at least one feature of an input signal of a current frame, wherein the at least one feature includes at least one of an estimated signal-to-noise ratio, a spectral centroid, a spectral flux, a spectral flux difference value, spectral flatness, energy distribution, and spectral correlations between adjacent frames;
   adding the calculated count change value with a previous count value of a previous frame to obtain a current count value;
   comparing the obtained current count value with a count threshold; and
   determining the category of the input signal of the current frame based on the comparison result, wherein the category includes noise, voiced sound, and unvoiced sound.

2. The method according to claim 1, wherein each feature has one or more threshold conditions associated therewith, and wherein the calculating a count change value based on at least one feature of an input signal of a current frame comprises:

   obtaining at least one combined threshold condition by combining at least one threshold condition of the at least one feature, the at least one combined threshold condition comprising at least one combined threshold condition for count increase and at least one combined threshold condition for count decrease;
   obtaining an addend based on the at least one combined threshold condition for count increase;
   obtaining a subtrahend based on the at least one combined threshold condition for count decrease; and
   calculating the count change value based on the addend and the subtrahend.

3. The method according to claim 1 or 2, further comprising:

   determining whether the estimated signal-to-noise ratio of the current frame is greater than or equal to a signal-to-noise ratio threshold and the spectral flatness is less than or equal to a spectral flatness threshold; and
   in response to the estimated signal-to-noise ratio of the current frame being greater than or equal to the signal-to-noise ratio threshold and the spectral flatness being less than or equal to the spectral flatness threshold, performing calculation of a first count change value; or
   in response to the estimated signal-to-noise ratio of the current frame being less than the signal-to-noise ratio threshold and the spectral flatness being greater than the spectral flatness threshold, performing calculation of a second count change value.

4. The method according to claim 3, wherein the performing calculation of a first count change value comprises:

   determining whether a first combined threshold condition for count increase in the at least one combined threshold condition for count increase is satisfied, the first combined threshold condition for count increase comprising a combined threshold condition associated with the estimated signal-to-noise ratio and the spectral flatness;
   in response to satisfying the first combined threshold condition for count increase, calculating the addend based on a value of the signal-to-noise ratio;
   calculating the subtrahend based on the at least one combined threshold condition for count decrease; and
   obtaining the first count change value based on the calculated addend and subtrahend.

5. The method according to claim 3, wherein the performing calculation of a second count change value comprises:

   calculating a voiced sound addend value based on a combined threshold condition for voiced sound in the at least one combined threshold condition for count increase;
   calculating an unvoiced sound addend value based on a combined threshold condition for unvoiced sound in the at least one combined threshold condition for count increase;
   calculating the subtrahend based on the at least one combined threshold condition for count decrease; and
   obtaining the second count change value based on the voiced sound addend value, the unvoiced sound addend value, and the subtrahend.

6. The method according to claim 4, further comprising:

setting the first count change value as the count change value, and adding the count change value with the previous count value of the previous frame to obtain the current count value.

7. The method according to claim 5, further comprising:
setting the second count change value as the count change value, and adding the count change value with the previous count value of the previous frame to obtain the current count value.

8. The method according to claim 6, further comprising:

   determining whether the current count value is greater than the count threshold; and
   in response to the current count value being greater than the count threshold, determining the input signal of the current frame as voiced sound; or
   in response to the current count value being less than or equal to the count threshold, determining the input signal of the current frame as noise.

9. The method according to claim 7, further comprising:

   determining whether the current count value is greater than the count threshold; and
   in response to the current count value being less than or equal to the count threshold, determining the input signal of the current frame as noise; or
   in response to the current count value being greater than the count threshold, determining whether the unvoiced sound addend value is greater than the count threshold:

      in response to the unvoiced sound addend value being greater than the count threshold, determining the input signal of the current frame as unvoiced sound; or
      in response to the unvoiced sound addend value being less than or equal to the count threshold, determining the input signal of the current frame as voiced sound.

10. The method according to claim 4 or 5, further comprising:

    determining whether the subtrahend is greater than the count threshold; and
    in response to the subtrahend being greater than the count threshold, determining the input signal of the current frame as voice hangover.

**FIG. 1**

**FIG. 2**

Calculate a count change value based on at least one feature — S302

Add the calculated count change value with a previous count value of a previous frame to obtain a current count value — S304

Compare the obtained current count value with a count threshold — S306

Detect the category of a current frame of an input signal according to the result of comparison — S308

**FIG. 3**

**FIG. 4**

**FIG. 5**

Frame sequence

**FIG. 6**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/000073 A1 (VOICEAGE CORP [CA]; MALENOWSKY VLADIMIR [CA] ET AL.) 31 December 2008 (2008-12-31) * page 16 – page 19 * * page 44 – page 45 * ----- | 1-10 | INV. G10L25/84 ADD. G10L25/78 |
| A | US 2006/053007 A1 (NIEMISTO RIITTA [FI]) 9 March 2006 (2006-03-09) * paragraph [0013] * ----- | 3 | |

TECHNICAL FIELDS SEARCHED (IPC)

G10L

The present search report has been drawn up for all claims

| Place of search | Date of completion of the search | Examiner |
|---|---|---|
| The Hague | 12 June 2023 | Taddei, Hervé |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 1727

12-06-2023

| Patent document cited in search report | | Publication date | Patent family member(s) | | Publication date |
|---|---|---|---|---|---|
| WO 2009000073 | A1 | 31-12-2008 | CA | 2690433 A1 | 31-12-2008 |
| | | | EP | 2162880 A1 | 17-03-2010 |
| | | | ES | 2533358 T3 | 09-04-2015 |
| | | | JP | 5395066 B2 | 22-01-2014 |
| | | | JP | 2010530989 A | 16-09-2010 |
| | | | RU | 2010101881 A | 27-07-2011 |
| | | | US | 2011035213 A1 | 10-02-2011 |
| | | | WO | 2009000073 A1 | 31-12-2008 |
| US 2006053007 | A1 | 09-03-2006 | CN | 101010722 A | 01-08-2007 |
| | | | EP | 1787285 A1 | 23-05-2007 |
| | | | FI | 20045315 A | 01-03-2006 |
| | | | KR | 20070042565 A | 23-04-2007 |
| | | | US | 2006053007 A1 | 09-03-2006 |
| | | | WO | 2006024697 A1 | 09-03-2006 |

EPO FORM P0459

For more details about this annex : see Official Journal of the European Patent Office, No. 12/82